# EUROPEAN PATENT APPLICATION

(11) **EP 2 763 254 A1**
(43) Date of publication of application: **06.08.2014**
(21) Application number: 13153864.7
(22) Date of filing: 04.02.2013
(51) Int. Cl.: H02G 3/06

(54) **An apparatus for sealing an elongate element**

(71) Applicant: CMP Products Limited, Northumberland NE23 1WH (GB)
(72) Inventor: Lowson, Andrew, Wallsend, Tyne and Wear NE28 7TQ (GB)
(74) Representative: Archer, Graham John

(57) **Abstract**

A cable gland (10) for sealing around a cable or other elongate element is disclosed. The gland (10) includes a seal (12 that goes over the cable and presses against the cable to form a seal. There is also a gripping portion (18) that has fingers (20) which move radially inwards towards the cable so as to apply a radially inwards force on the seal. There are mutually threaded body portions (22, 24) that engage each other and contain the other components with one body portion having an inclined surface (34) that the fingers (20) of the gripping portion (18) engage. As the body portions (22, 24) move towards each other, the fingers (20) move down the inclined surface (34) and press on the seal (12). There is also an insert (48) that is added if the gland is to be used on a small cable. The insert (48) sits against the inclined surface (34) and has its own inclined surface (54) that is preferably at a steeper angle and leading to a smaller aperture than the one on the body portion (22).

## Description

The present invention relates to an apparatus for sealing an elongate element and to an insert for use in such an apparatus and relates particularly, but not exclusively, to a plastic cable gland for sealing around a cable.

The use of a cable gland to seal around a cable, or other elongate object such as a tube or pipe is well known. It is also commonplace in plastic cable glands, although also known in metal cable glands, to include in the gland a gripping portion having fingers that are forced radially inward onto the seal, to apply pressure to the seal thereby improving the seal and grip around the cable. These fingers enable a cable gland to successfully operate over a larger range of cable diameters than is possible if the gripping portion is not used.

However, to further extend the range of cable diameters that a gland can successfully operate on, it is necessary to provide a variety of seals having different internal diameters. This is achieved either by providing two or more seals having the same external diameter and differing internal diameters or by providing two or more seals that fit inside each other with the inner seals being removed if their internal diameter is too small for a large cable. As a result, a significant amount of seal material, typically rubber or neoprene, is wasted and the seal is generally larger than is strictly necessary in order to ensure easy handling by the operator when changing seal sizes. Furthermore, thicker seals tend to operate less well than thinner seals as the compression force can be lost in the thickness of the seal.

Preferred embodiments of the present invention seek to overcome the above disadvantages of the prior art.

According to an aspect of the present invention, there is provided an apparatus for sealing around an elongate element, the apparatus comprising:
a seal comprising a tubular sealing portion and adapted to be compressed into engagement with an elongate element, such that an internal surface of the tubular sealing portion is pressed into engagement with an external surface of said elongate element;
a gripping portion comprising a plurality of fingers, ends of said fingers being adapted to move radially inwards towards an axis of said apparatus so as to apply a radially inwards force to said seal;
a first body portion having a first threaded portion;
a second body portion having a second threaded portion adapted to engage said first threaded portion and having a first finger engaging surface inclined at a first angle relative to said axis for pressing said fingers into engagement with said seal; and
an insert adapted to engage said second body portion adjacent said first finger engaging surface and having a second finger engaging surface inclined at a second angle relative to said axis for pressing said fingers into engagement with said seal.

By providing an insert that changes the angle or length of the surface that engages the fingers and forces them radially inwards towards the seal, provides the advantage that the range of sizes of cables that the cable gland can properly seal and grip is significantly increased without changing the size of the seal. As a result a thin seal can be used giving better sealing properties over a range of cable sizes. Because the fingers engage the insert before the equivalent surface of the second body, the fingers, and the seal, start to move inwards sooner than if the insert is not use and can seal around a smaller cable. As a result, it is also not necessary to provide multiple seals to allow the cable gland to work over a range of cable sizes. Although the insert is a disposable item which is not used when the cable gland is being used on a larger cable, it is much easier to remove an insert from the gland than it is to remove a seal or remove one seal from within another seal. It is also the case that because the seal is made from a rigid material it is impossible to force it onto a cable that it is not designed for, whereas a seal can be forced onto an incorrect size of cable thereby reducing the effectiveness of the seal. Furthermore, the sealing properties of the thinner seal are also better than where multiple seals are placed one inside the other, as seen in the prior art, since this leaves more vulnerability to leaking between seals. These sealing properties are also better than sealing with very thick seals.

In a preferred embodiment, the second angle is different from the first angle.

In another preferred embodiment, a diameter of an aperture formed by said second finger engaging surface of said insert is smaller than an aperture formed by said first finger engaging surface of said second body portion.

In a preferred embodiment, the first body portion further comprises said gripping portion.

In an alternative preferred embodiment, the first body portion and said gripping portion are separate components and said gripping portion further comprising a tubular portion having said fingers extending therefrom and said first body portion engages said tubular portion to force said gripping portion towards said second body portion.

In another preferred embodiment, the first and second angles are less than 90° and said second angle is larger than said first angle.

In a further preferred embodiment, the first threaded portion is an external thread and said second threaded portion is an internal thread.

In a preferred embodiment, the first and second body portions comprise at least one plastic material.

In another preferred embodiment, the insert comprises at least one plastic material.

In a further preferred embodiment, the plastic material comprises Nylon.

The apparatus may further comprise an end cap having a capping portion for covering an aperture in said second body portion through which said elongate member extends and a retaining portion for engaging an internal surface of said second body portion or an internal surface of said insert so as to retain said capping portion in engagement with an external surface of said second body portion adjacent said aperture.

By providing an end cap that covers the aperture in the second body portion and has a retaining portion that engages with an internal surface of the second body portion or the insert, the advantage is provided that dust protection is provided where a cable gland has been installed into, for example a box, but the cable has not been inserted into the box at that time. Furthermore, the shape of the end cap, with the retaining portion extending into the cable gland, towards the inside of the box, means that the end cap can only be removed from inside the box making it extremely unlikely that the end cap will accidentally be removed before it is required.

According to another aspect of the present invention, there is provided an insert for use in an apparatus for sealing around an elongate element, the insert comprising an abutment portion adapted to engage a body portion of an apparatus, for sealing around an elongate element, adjacent a first finger engaging surface of said body portion, the first finger engaging surface inclined at a first angle relative to an axis of the apparatus, the insert further comprising a second finger engaging surface inclined at a second angle relative to said axis for pressing fingers of a gripping portion of the apparatus into engagement with a seal of the apparatus.

In a preferred embodiment, the second angle is different from the first angle.

In another preferred embodiment, a diameter of an aperture formed by said second finger engaging surface of said insert is smaller than an aperture formed by said first finger engaging surface of said second body portion.

In a preferred embodiment, the first and second angles are less than 90° and said second angle is larger than said first angle.

In another preferred embodiment, the insert comprises a plastic material.

In a further preferred embodiment, the plastic material comprises Nylon.

Preferred embodiments of the present invention will now be described, by way of example only, and not in any limitative sense, with reference to the accompanying drawings in which:-
Figures 1A and 1B are end views of an apparatus of the present invention shown respectively without and with an insert;
Figures 2A and 2B are sectional views, respectively along the lines A - A and B - B, of the apparatus of Figures 1A and B;
Figures 3 and 4 are exploded perspective views of the components of the apparatus of Figures 1B and 2B, viewed in different directions; and
Figure 5A and 5B an end view and a corresponding sectional view along the line C-C of an embodiment of the present invention including an end cap.

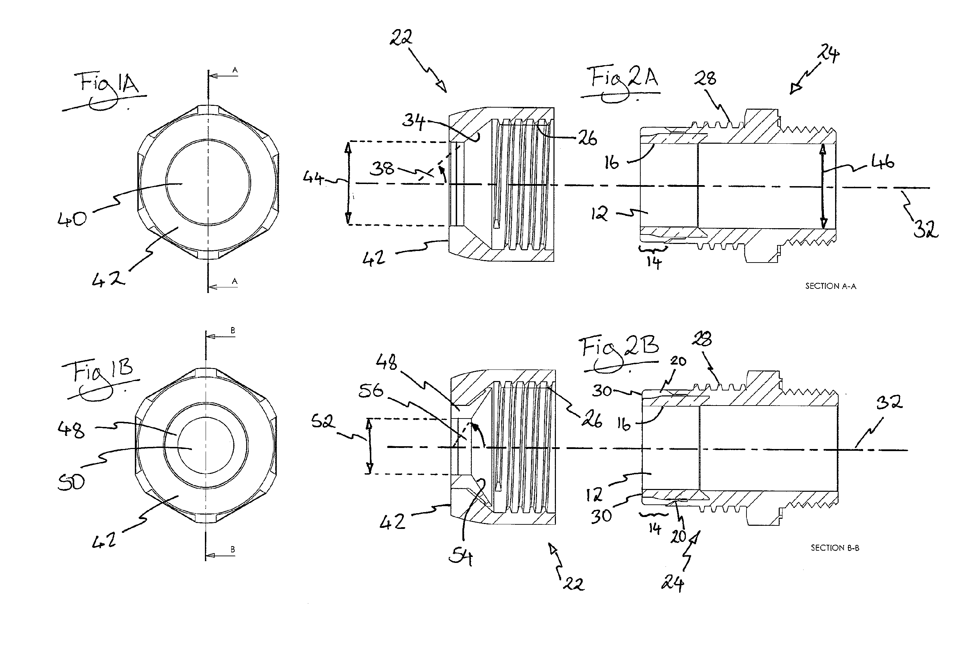

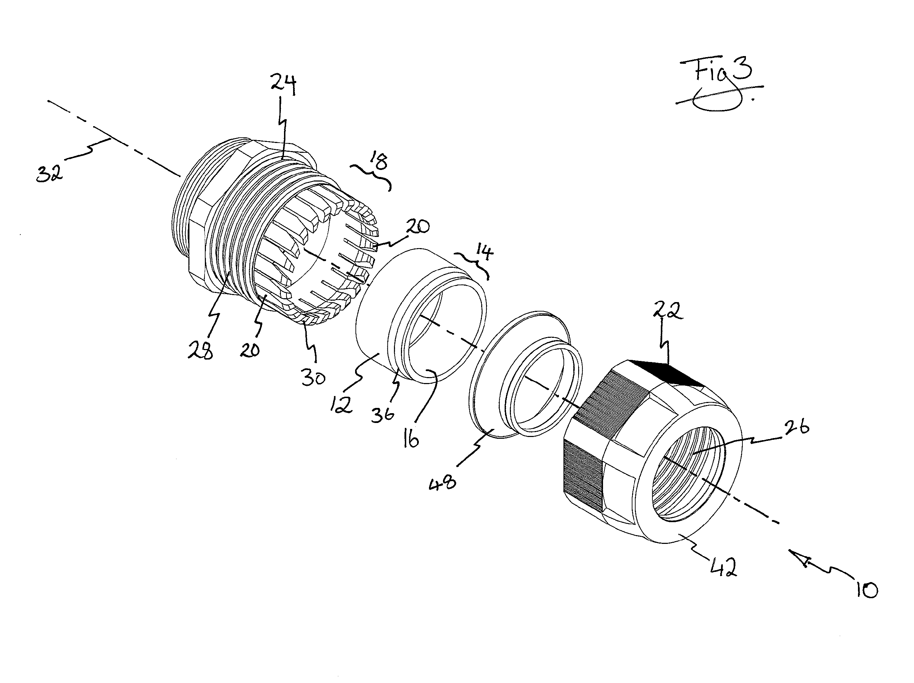

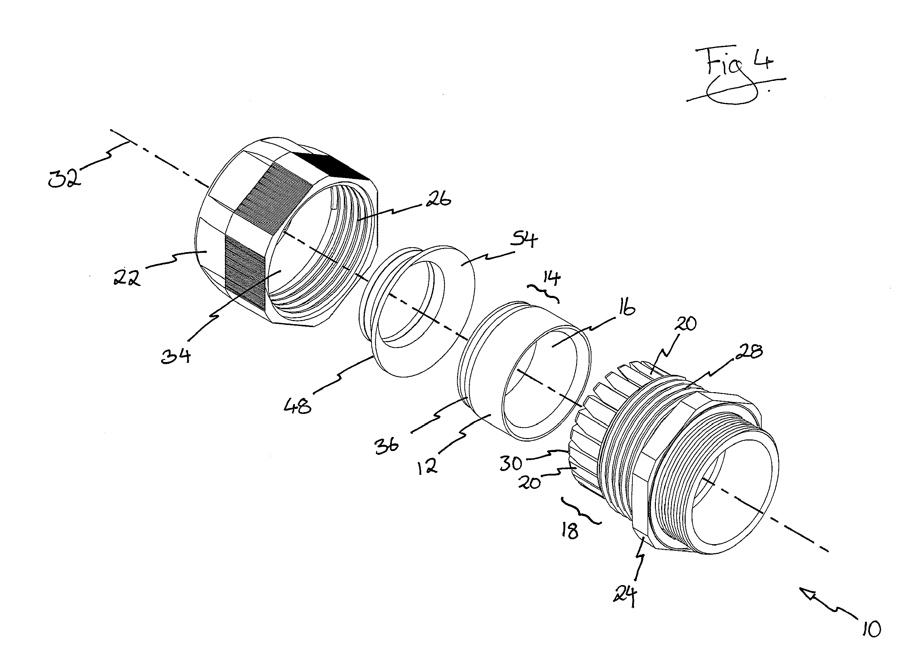

Referring to Figures 1 to 4, an apparatus, in the form of cable gland 10, is provided for sealing around an elongate element such as an electrical cable, pipe, tube or rod (not shown). The cable gland includes a seal 12 that has a tubular sealing portion 14 that is able to compress into engagement with the cable so that an internal surface 16 of the tubular sealing portion 14 is pressed into engagement with an external surface of the cable.

The cable gland also has a gripping portion 18 that includes a plurality of flexible fingers 20. The cable gland 10 has first and second body portions 22 and 24 that have respective threaded portions 26 and 28. The internal first threaded portion 26 of first body portion 22 in use engages with the external second threaded portion 28 of second body portion 24. The fingers 20 of gripping portion 18 are attached at one end to the second body portion 24 adjacent the second threaded portion 28. The distal ends 30 of fingers 20 can move radially inwards towards axis 32, which is the axis of the cable gland 10 and any cable or other elongate member running therethrough. The distal ends 30 of fingers 20 are shaped so that they can continue to move closer to each other even when the spaces between the fingers become closed together in a way that is familiar to persons skilled in the art. The second body portion 24 has a first finger engaging surface 34 immediately adjacent the second threaded portion 28. This first finger engaging surface engages the distal ends 30 of fingers 20 and as second body portion 24 is threaded onto the first threaded portion 26 of first body portion 22 the fingers 20 are bent radially inwards towards axis 32 thereby pressing on to seal 12 in particular pressing the recessed annular ridge 36 in sealing portion 14. As a result of the distal ends 30 of fingers 20 moving radially inwards and pressing into annular recess 36, the internal surface 16 of seal 12 is also moved radially inwards and applies a sealing and/or gripping force to the cable. As seen in Figure 2A, the first finger engaging surface 34 is set at an angle indicated at 38 relative to the axis 32.

An aperture 40, in the end surface 42 of first body portion 22, has a diameter (indicated at 44) that is approximately the same as the diameter (indicated at 46) of the aperture extending through the second body portion 24 and seal 12. These diameters indicate the diameter of the largest cable that can be sealed using gland 10.

Cable gland 10 also has a further component, insert 48 that is optionally included in the cable gland where a smaller diameter cable is to be gripped. An aperture 50 in insert 48 has a diameter indicated at 52 which is the diameter of the largest cable that can be used with the insert 48. In other words, if the cable being used has a diameter greater than that indicated at 58 then the insert 48 should not be used. However, if the cable has a diameter less than that indicated at 52,(but more than the minimum diameter that the cable gland is designed for use with, and not indicated here), then the insert 48 should be used. Insert 48 is used by inserting it into first body portion 22 so that the insert 48 extends into aperture 40 and engages the first finger engaging surface 34. The insert 48 is provided with a second finger engaging surface 54 that operates in the same manner as the first finger engaging surface 34 by replacing that surface. The second finger engaging surface 54 is inclined at an angle indicated at 56, relative to axis 32. The acute angle of second finger engaging surface 54 relative to axis 32 (at 56) is greater than the acute angle of first finger engaging surface 34 relating to axis 32 (at 38). As a result, the fingers 30 are forced together more rapidly, for each turn of the first body portion relative to the second body portion, thereby causing the sealing portion 14 of seal 12 to move radially inwards sooner, allowing it to apply a sealing and/or gripping force to a smaller cable.

In the example shown, the first and second body portions 22 and 24 are formed from a plastic material. The insert 48 is also formed from a plastic material, preferably nylon, and the seal 12 is formed from a rubberised material such as neoprene. However, the present invention is equally applicable to any other form of cable gland that includes fingers 20. In one example, the first and second body portions are formed from a metallic material and the gripping portion 18 is formed as a separate component from the second body portion 24, the gripping portion being made from a plastic material. In this embodiment, the gripping portion requires a tubular portion that abuts against the second body portion and from which the fingers 20 extend.

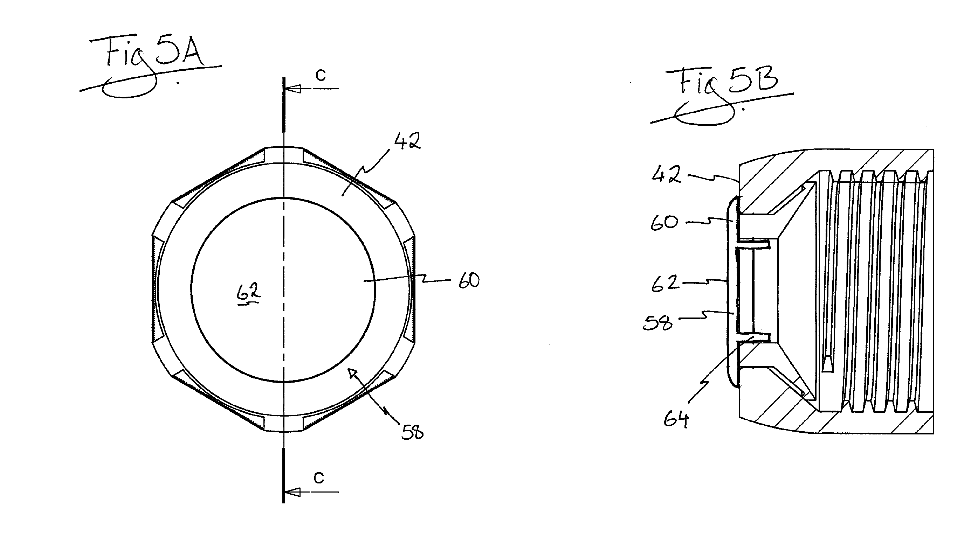

Referring to Figures 5A and 5B, the apparatus may optionally also include an end cap 58. The purpose of the end cap is to cover and substantially seal the apertures 40 and 50 when the gland 10 has been installed in a box (not shown) but before a cable is installed. This covering and sealing need only be sufficient to prevent dust from getting into the box. The end cap 58 includes an external portion 60 in the form of a disc having a curved external surface 62 and in use sits flush with end surface 42 of first body portion 22. A retaining portion 64, that can either be annular or in the form of two or more partially annual legs, extends into aperture 50 and grips the surface of aperture 50 and may extend (further than is shown in Figure 5B) to partially engage finger engaging surface 54. The end cap 58 is removed from engagement with the gland 10 by pushing from an internal side of the gland.

It will be appreciated by persons skilled in the art that the above embodiments have been described by way of example only and not in any limitative sense, and that the various alterations and modifications are possible without departure from the scope of the invention as defined by the appended claims. For example, the insert also works even if the angle 56 of the finger engaging surface 54 is the same as the angle 38 of the finger engaging surface 34 on second body portion 22, because it is causing the fingers and the seal to move inwards sooner than if the insert were not present. In this instance it is preferable to make the aperture diameter 52 of the insert smaller than the aperture diameter 44 of the second body portion to ensure that the insert cannot be used on larger cables. However, this feature is not essential and the insert works even if the diameters 44 and 52 are the same and the angles 38 and 56 are the same.

## Claims

1. An apparatus for sealing around an elongate element, the apparatus comprising:
a seal comprising a tubular sealing portion and adapted to be compressed into engagement with an elongate element, such that an internal surface of the tubular sealing portion is pressed into engagement with an external surface of said elongate element;
a gripping portion comprising a plurality of fingers, ends of said fingers being adapted to move radially inwards towards an axis of said apparatus so as to apply a radially inwards force to said seal;
a first body portion having a first threaded portion;
a second body portion having a second threaded portion adapted to engage said first threaded portion and having a first finger engaging surface inclined at a first angle relative to said axis for pressing said fingers into engagement with said seal; and
an insert adapted to engage said second body portion adjacent said first finger engaging surface and having a second finger engaging surface inclined at a second angle relative to said axis for pressing said fingers into engagement with said seal.

2. An apparatus according to claim 1, wherein said second angle is different from said first angle.

3. An apparatus according to claim 1 or 2, wherein a diameter of an aperture formed by said second finger engaging surface of said insert is smaller than an aperture formed by said first finger engaging surface of said second body portion.

4. An apparatus according to any of claims 1 to 3, further comprising one or the other of the following features:-
(a) wherein said first body portion further comprises said gripping portion; and
(b) wherein said first body portion and said gripping portion are separate components and said gripping portion further comprising a tubular portion having said fingers extending therefrom and said first body portion engages said tubular portion to force said gripping portion towards said second body portion.

5. An apparatus according to any of claims 2 to 4, wherein said first and second angles are less than 90° and said second angle is larger than said first angle.

6. An apparatus according to any of the preceding claims, wherein said first threaded portion is an external thread and said second threaded portion is an internal thread.

7. An apparatus according to any of the preceding claims, wherein said first and second body portions comprise at least one plastic material.

8. An apparatus according to any of the preceding claims wherein said insert comprises at least one plastic material.

9. An apparatus according to claim 8, wherein said plastic material comprises Nylon.

10. An apparatus according to any of the preceding claims, further comprising an end cap having a capping portion for covering an aperture in said second body portion through which said elongate member extends and a retaining portion for engaging an internal surface of said second body portion or an internal surface of said insert so as to retain said capping portion in engagement with an external surface of said second body portion adjacent said aperture.

11. An insert for use in an apparatus for sealing around an elongate element, the insert comprising an abutment portion adapted to engage a body portion of an apparatus, for sealing around an elongate element, adjacent a first finger engaging surface of said body portion, the first finger engaging surface inclined at a first angle relative to an axis of the apparatus, the insert further comprising a second finger engaging surface inclined at a second angle relative to said axis for pressing fingers of a gripping portion of the apparatus into engagement with a seal of the apparatus.

12. An apparatus according to claim 12, wherein said second angle is different from said first angle.

13. An apparatus according to claim 12 or 13, wherein a diameter of an aperture formed by said second finger engaging surface of said insert is smaller than an aperture formed by said first finger engaging surface of said second body portion.

14. An insert according to any of claims 12 to 14, wherein said first and second angles are less than 90° and said second angle is larger than said first angle.

15. An insert according to any of claims 12 to 15, wherein said insert comprises a plastic material.
